# EUROPEAN PATENT APPLICATION

(11) **EP 4 706 903 A1**
(43) Date of publication of application: **11.03.2026**
(21) Application number: 24841097.9
(22) Date of filing: 18.07.2024
(51) Int. Cl.: B25J 9/16, B25J 9/00

(54) **METHOD AND APPARATUS FOR EXECUTING USER TASK, AND DEVICE AND MEDIUM**

(71) Applicant: BEIJING YOUZHUJU NETWORK TECHNOLOGY CO. LTD., Beijing 101299 (CN)
(72) Inventor: LI, Yifeng, Beijing 100028 (CN); ZHU, Minzhao, Beijing 100028 (CN); KONG, Tao, Beijing 100028 (CN)
(74) Representative: Grünecker Patent- und Rechtsanwälte PartG mbB
(86) International application number: PCT/CN2024/106244
(87) International publication number: WO 2026/016133

(57) **Abstract**

A method, apparatus, device and medium for performing a user task are provided. In a method, a user task is received from a user, and the user task instructs a robot device to obtain a first object. A first image of a first physical space where a robot device is located is obtained. In response to determining that the first image indicates absence of the first object in the first physical space, a second physical space is determined. The robot device accesses a second physical space so as to obtain a first object. By means of the exemplary implementation of the present disclosure, the robot device can perform a user task in a complex physical space, so that the flexibility and accuracy of the robot device in performing a task in a complex environment can be improved, thereby completing an expected user task.

## Description

### FIELD

Example implementations of the present disclosure relate generally to the field of robots, and more particularly, to a method, an apparatus, a device, and computer-readable storage medium for performing a user task by using a robot.

### BACKGROUND

Robotic technology has been rapidly developed and has been widely used in a plurality of technical fields. A variety of specialized robot devices have been developed currently, for example, in industrial environments, robots can be used to perform a variety of tasks, such as machining, grabbing, sorting, packing, etc. For another example, in a home environment, a floor clearing robot, a glass cleaning robot, and the like have been developed. However, the robot generally can only perform a preset fixed task, and cannot perform different user tasks according to user requirements.

### SUMMARY

In a first aspect of the present disclosure, a method for performing a user task is provided. In the method, a user task is received from a user, and the user task instructs a robot device to obtain a first object. A first image of a first physical space where the robot device is located is obtained. In response to determining that the first image indicates absence of the first object in the first physical space, a second physical space is determined. The robot device accesses a second physical space so as to obtain a first object.

In a second aspect of the present disclosure, an apparatus for performing a user task is provided. The apparatus includes: a receiving module configured to receive a user task from a user, the user task instructing a robot device to obtain a first object; an obtaining module configured to obtain a first image of a first physical space where the robot device is located; a determining module configured to in response to determining that the first image indicates absence of the first object in the first physical space, determine a second physical space; and a performing module configured to cause the robot device to access the second physical space to obtain the first object.

In a third aspect of the present disclosure, an electronic device is provided. The electronic device includes: at least one processing unit; and at least one memory coupled to the at least one processing unit and storing instructions for execution by the at least one processing unit that, when executed by the at least one processing unit, cause the electronic device to perform a method according to the first aspect of the present disclosure.

In a fourth aspect of the present disclosure, there is provided a computer readable storage medium having stored thereon a computer program which, when executed by a processor, causes the processor to implement the method according to the first aspect of the present disclosure.

In a fifth aspect of the present disclosure, a computer program product is provided, including a computer program, where the computer program, when executed by a processor, implements the method according to the first aspect of the present disclosure.

It should be appreciated that what is described in this Summary is not intended to limit the key features or essential features of the implementations of the present disclosure, nor is it intended to limit the scope of the present disclosure. Other features of the present disclosure will become readily appreciated from the following description.

### BRIEF DESCRIPTION OF THE DRAWINGS

Hereinafter, the above and other features, advantages, and aspects of various implementations of the present disclosure will become more apparent with reference to the following detailed description taken in conjunction with the accompanying drawings. In the drawings, the same or similar reference signs denote the same or similar elements, where:
Fig. 1 illustrates a block diagram of an application environment according to an exemplary implementation of the present disclosure;
Fig. 2 illustrates a block diagram for performing a user task according to some implementations of the present disclosure;
Fig. 3 illustrates a block diagram of an image acquisition process according to some implementations of the present disclosure;
Fig. 4 illustrates a block diagram of a process of calling a language model according to some implementations of the present disclosure;
Fig. 5 illustrates a block diagram of a process to identify an object from an image, in accordance with some implementations of the present disclosure;
Fig. 6 illustrates a block diagram of a process of invoking an action model in accordance with some implementations of the present disclosure;
Figs. 7A and 7B illustrate block diagrams of a process of obtaining an object, respectively, according to some implementations of the present disclosure;
Fig. 8 illustrates a flowchart of a method for performing a user task according to some implementations of the present disclosure;
Fig. 9 illustrates a block diagram of an apparatus for performing user tasks in accordance with some implementations of the present disclosure; and
Fig. 10 illustrates a block diagram of a device capable of implementing various implementations of the present disclosure.

### DETAILED DESCRIPTION

Embodiments of the present disclosure will be described in more detail below with reference to the accompanying drawings. Although certain implementations of the present disclosure are shown in the drawings, it should be understood that the present disclosure may be implemented in various forms and should not be construed as limited to the implementations set forth herein; rather, these implementations are provided for a thorough and complete understanding of the present disclosure. It should be understood that the drawings and implementations of the present disclosure are only for exemplary purpose and are not intended to limit the scope of protection of the present disclosure.

In the description of implementations of the present disclosure, the term "including" and its similar language should be understood as open-ended including, that is, "including but not limited to". The term "based on" should be read as "based at least in part on". The term "one implementation" or "the implementation" should be read as "at least one implementation". The term "some implementations" should be understood as "at least some implementations". Other explicit and implicit definitions may also be included below. As used herein, the term "model" may denote an association relationship between respective data. The association relationship may be obtained, for example, based on a variety of technical solutions that are currently known and/or will be developed in the future.

It is to be understood that the data involved in the technical solution (including but not limited to the data itself, the acquisition or use of the data) should comply with the requirements of the corresponding legal regulations and related provisions.

It should be understood that, before the technical solutions disclosed in the embodiments of the present disclosure are used, the user should be informed of the type of the personal information, the usage range, the usage scenario, and the like related to the present disclosure and the authorization of the user should be obtained in an appropriate manner according to relevant legal regulations.

For example, in response to receiving an active request from a user, prompt information is sent to the user to explicitly prompt the user that an operation requested by the user will require acquisition and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, a manner of sending prompt information to a user in response to receiving an active request from the user may be, for example, a manner of popping up a window, and the prompt information may be presented in a text manner in the pop-up window. In addition, the pop-up window may also carry a selection control for the user to select whether he/she "agrees" or "disagrees" to provide personal information to the electronic device.

It can be understood that, the above processes of notification and obtain of the user authorization are only illustrative, and do not limit the implementation of the present disclosure, and other methods meeting relevant legal regulations may also be applied to the implementation of the present disclosure.

As used herein, the term "in response to" refers to a state in which a corresponding event occurs or a condition is satisfied. It will be appreciated that the timing of the execution of a subsequent action that is performed in response to the event or condition, and the time at which the event occurs or condition is established, are not necessarily strongly correlated. For example, in some cases, the subsequent actions may be performed immediately upon occurrence of an event or upon satisfaction of a condition; in other cases, subsequent actions may be performed only after a period of time has passed when an event occurs or a condition is established.

### Example Environment

In recent years, a robot technology and a machine learning technology have been widely applied to a plurality of application scenarios. However, a robot generally can only perform a preconfigured fixed task, and cannot perform different user tasks according to user requirements. In particular, in a complex application environment, it is difficult for a robot device to determine a user's demand and perform a corresponding task.

A simple robot device for performing a specific task has been developed, however, such a simple robot device cannot understand complicated user instructions and cannot perform a desired task in accordance with the user instructions in a complicated physical space 160. In this case, it is desirable that the operation of the robot can be controlled in an efficient manner, thereby a desired task can be performed.

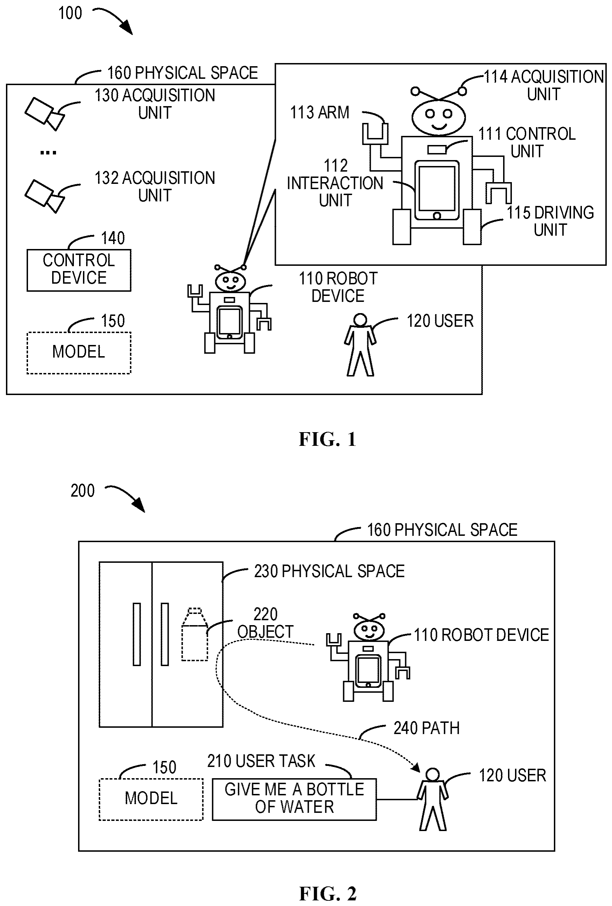

According to an exemplary implementation of the present disclosure, a method for performing a user task is provided. An application environment according to one example implementation of the present disclosure is described with reference to Fig. 1, which illustrates a block diagram 100 of an application environment according to one example implementation of the present disclosure. As shown in Fig. 1, the robot device 110 and the user 120 may be located in a physical space 160, and the user 120 may control the robot device 110 to perform various tasks. The physical space 160 may include, but is not limited to, one or more rooms. For example, in a home environment, the physical space 160 may include, but is not limited to, a living room, a bedroom, a study, a kitchen, a toilet, etc., or a combination including one or more of the foregoing.

As shown in Fig. 1, the robot device 110 may include a plurality of parts. For example, as a control center of the robot device 110, the control unit 111 may load an application into the control unit 111 to control each part in the robot device. The user 120 may use an interaction unit 112 to interact with the robot device 110, for example, to input control instructions to the robot device 110, so as to perform a desired task by using the robot device 110. The robot device 110 may include an arm 113 for performing an action of grabbing, releasing, etc. For example, the arm 113 may grab a certain object and move the object to a desired position, etc.

Alternatively, and/or additionally, the robot device 110 may also include an acquisition unit 114. Here, the acquisition unit 114 may include a variety of types, e. g., an image acquisition unit, a sound acquisition unit, etc. Alternatively, and/or additionally, the robot device 110 may further include a sensing unit for detecting a surrounding object, e. g., a distance of the robot from the surrounding object may be detected based on a laser, etc. The robot device 110 may also include a driving unit 115, e. g., the robot device 110 can be deployed over a movable base, and the driving unit 115 can drive wheels of the base to move along a desired path.

The physical environment 160 may include one or more acquisition units 130, ..., and 132, for example, one or more image acquisition devices may be deployed in a room to acquire images of the room from various perspectives. The physical environment 160 may include a control device 140 that can control one or more acquisition units 130, ..., and 132, etc., via a network (not shown). Alternatively, and/or additionally, in a smart home environment, the control device 140 may control various electrical devices in the physical space 160.

Alternatively, and/or additionally, a machine learning model (e. g., model 150) may be provided to manage physical space 160. It should be appreciated that while Fig. 1 illustrates the model 150 located inside the physical space 160, alternatively and/or additionally, the model 150 may be located at a remote device outside the physical space 160, and the control device 140, the robot device 110, or other devices may access the remote model 150 via a network.

The model 150 may include one or more models. If the model 150 includes a plurality of models, the plurality of models may include a plurality of types of models. The model 150, for example, may include at least a language model (LM) and an action model. The language model may have a question-answering capability by learning from a large amount of corpus. The action model may control the robot device 110 to perform various actions. The model 150 may further include, for example, an image recognition model, a text recognition model, and the like.

As shown in Fig. 1, the user 120 may instruct the robot device 110 to operate various objects in the physical space 160. Here, the object may be various items in a home environment, for example, the user 120 may instruct the robot device 110 to look for an object in the physical space 160. For another example, the user 120 can instruct the robot device 110 to place a found object to a designated position, etc.

### Overview of Performing a Task

In order to at least partially solve the deficiencies in the existing solutions, according to an exemplary implementation of the present disclosure, a method for performing a user task is provided. An overview of one exemplary implementation according to the present disclosure is described with reference to Fig. 2, which illustrates a block diagram 200 for performing a user task according to some implementations of the present disclosure.

As shown in Fig. 2, a robot device 110 in a physical space 160 (also referred to as a first physical space) may receive a user task 210 from a user 120. In this case, the user task 210 can instruct or control the robot device 110 to obtain a first object (the first object may be referred to as a target object for convenience of description). For example, the user 120 may speak "Give me a bottle of water" in natural language, the first object in the example of Fig. 2 being "A bottle of water" (e. g., object 220). The robot device 110 may obtain a first image of a first physical space where the robot device is located. For example, the first image can be obtained via at least any one of acquisition units 114, 130, and 132.

In response to determining that the first image indicates absence of the first object in the first physical space, a second physical space may be determined. Here, the second physical space may be another physical space that may include the first object, for example, in a home environment, since a bottled water may be placed in a refrigerator, a kitchen, or another position, it may be determined that the second physical space is a refrigerator and/or a kitchen. As shown in Fig. 2, assuming that a room includes a refrigerator, the refrigerator may be determined as a second physical space (i. e., the physical space 230). In this case, the robot device 110 accesses the second physical space to obtain the first object.

According to some implementations of the present disclosure, the methods described above may be performed at any computing device having computing capabilities. For example, the methods described above may be performed using an application deployed at the robot device 110. Alternatively, and/or additionally, an application may be deployed at the control device 140 to perform the method described above. In particular, powerful processing capability of the model 150 may be called in order to find a physical space 230 that may include the object 220. In turn, the robot device 110 may proceed to the refrigerator, take out the object 220, return to a position of the user 120 along the path 240, and provide the taken object 220 to the user 120.

With exemplary implementations of the present disclosure, the robot device may perform a user task in a complex physical space. In this way, even if the target object cannot be found directly in the physical space, the robot device can find a potential physical space in the physical space that may include the target object, thereby finding the desired object. In this way, the flexibility and accuracy of the robot device in executing a task in a complex environment can be improved, thereby completing a desired user task.

### Detailed Process of Performing a Task

Having described an overview of some implementations in accordance with the present disclosure, in the following, more details regarding performing user tasks will be described. For ease of description, more details of performing a user task are described below, with only control robot device 110 taking the bottled water back as an example.

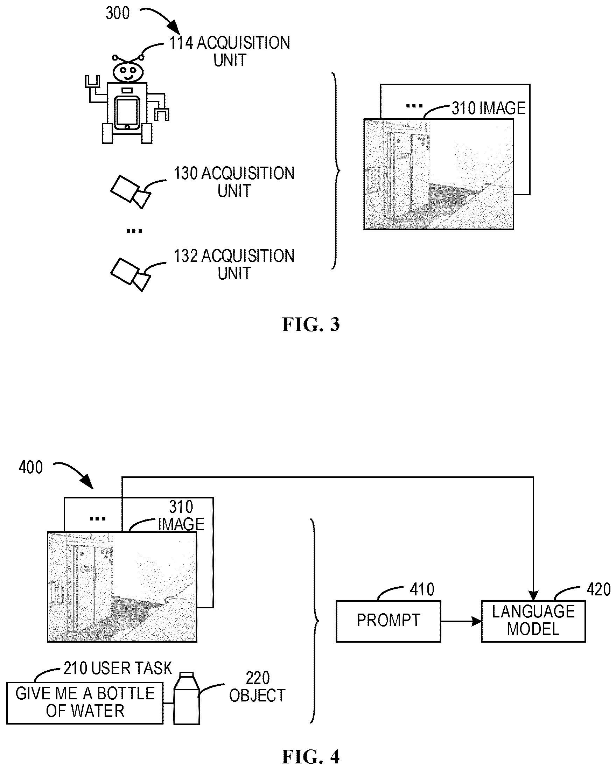

According to some implementations of the present disclosure, the first image may be from at least one of an acquisition device at a robot device, an acquisition device in a first physical space, an acquisition device in the second physical space. Further details of image acquisition are described with reference to Fig. 3. Fig. 3. illustrates a block diagram 300 of an image acquisition process in accordance with some implementations of the present disclosure. As shown in Fig. 3, a first image (e. g., one or more images 310) of the physical space 160 can be obtained from the acquisition unit 114 at the robot device 110. Since the robot device 110 can freely move in the physical space 160, the acquisition unit 114 can acquire images at various positions in the physical space, thereby facilitating searching for a target object.

Alternatively, and/or additionally, a first image of the physical space 160 may be obtained from the acquisition units 130, ..., and 132. Here, the acquisition units 130, ..., and 132 may be pre-deployed at designated positions within the physical space 160, e. g., corner positions of ceilings, etc. In this way, an image of the physical space 160 taken from a top view angle can be obtained, thereby facilitating the overall understanding of the layout of the physical space 160, and further facilitating the positioning of a target object.

According to some implementations of the present disclosure, whether the first image includes the first object may be determined in a variety of ways. For example, the first object may be identified from the first image based on image recognition techniques. Alternatively, and/or additionally, a prompt may be constructed and input to the model to call processing capability of the model to identify the first object from the first image. The prompts may be expressed, for example, as follows: "Please recognize 'bottled water' from the following image", and submit the acquired image and the prompt to the model.

The model may process the image, and in a case that the image includes the first object, the model may output the position of the object (e. g., outputting area coordinates of the object in the image, and/or directly output the image of the area where the object is positioned, etc.). If the image does not include the target object, the model may output a response such as "Not Found. " With some implementations of the present disclosure, it can be detected whether the image includes the target object based on a plurality of manners, thereby improving the performance of the robot device in obtaining the target object.

According to some implementations of the present disclosure, in response to determining that the first image indicates absence of the first object in the first physical space, the second physical space is determined. It should be understood that the second physical space herein is a potential physical space that may include the first object. For example, in a home environment, as the bottled water may be placed in the refrigerator or the kitchen, the second physical space may be determined to be a refrigerator and/or a kitchen. Specifically, in a process of determining the second physical space, a prompt for positioning a first object may be obtained based on a first image and the first object; and a response from the machine learning model to the prompt is received to determine the second physical space.

More details regarding determining a second physical space are described with reference to Fig. 4. Fig. 4 illustrates a block diagram 400 of a process of calling a language model in accordance with some implementations of the present disclosure. As illustrated in Fig. 4, the object 220 to be obtained may be determined to be "bottled water" from the user task 210, and a corresponding prompt 410 may be generated based on the image 310 and the object 220. For example, the prompt 410 may be expressed as "Please determine a physical space that may include "bottled water" from the following image". For another example, the prompt 410 may be expressed as "where the "bottled water" may be placed in the following image" etc. The prompt 410 and the image 310 may be input to the language model 420 such that the language model 420 finds a second physical space that may include bottled water from the image 310.

According to some implementations of the present disclosure, the language model 420 is a trained and fine-tuned model and has rich knowledge in performing tasks in a plurality of domains. The language model 420 may determine that the image 310 includes a refrigerator, and recognize the refrigerator as the second physical space. Fig. 4 is merely illustrative and the language model 420 may process one or more images from different acquisition devices and find one or more second physical spaces that may include bottled water. For example, assuming that another image includes a locker, and the locker may be determined as the second physical space. Alternatively, and/or additionally, assuming the user tasked with "Searching for fruit knives", the model may determine that a fruit knife may be placed in a drawer of the cabinet, at this point, the drawer of the cabinet may be determined as the second physical space.

According to some implementations of the present disclosure, a fine-tuning operation may be performed on a model, for example, a robot device may be instructed to acquire images of various parts in a first physical space in advance, for example, the robot device 110 may open a refrigerator (or a cabinet or a drawer), and acquire images related to various objects in the refrigerator. In this way, the specific storage positions of various objects can be learned by the model, thereby improving the accuracy of determining the second physical space.

With some implementations of the present disclosure, a second physical space, potentially including a first object, may be determined using powerful processing capability of the model and the rich knowledge. Then, the robot device can be instructed to proceed to the second physical space so as to continue to search for a target object. Compared with the prior art solution in which the target object can only be search in a visible physical space by means of image recognition, the technical solution of the present disclosure can search for a target object in more potential physical spaces, thereby finding a hidden object that is not directly exposed to a coverage range of an acquisition device. In this manner, the efficiency and accuracy of positioning the first object may be improved, thereby improving the overall efficiency of performing the user task.

According to some implementations of the present disclosure, a second physical space may be determined based on image recognition. Specifically, in a process of determining the second physical space, a plurality of second objects may be identified from a first image, a second object is selected from the plurality of second objects based on a knowledge base, and a space associated with the second object is taken as the second physical space. According to some implementations of the present disclosure, an associated space may include a plurality of cases. Specifically, a space of the second object itself may be used as the second physical space. For example, the second object may be a refrigerator, and in this case, the refrigerator may be used as the second physical space. Alternatively, and/or additionally, a kitchen may be identified from the image, when the second object is the kitchen, and the kitchen may be taken as the second physical space. Alternatively, and/or additionally, the second physical space may include other objects, and the space of the other objects may be taken as a new second physical space. For example, a kitchen may include a cabinet, where the cabinet may be used as a second space, etc.

Here, the knowledge base may be predefined and include associations between physical spaces and objects. For example, the knowledge base may include: (bottled water, refrigerator), (fruit knife, cabinet drawer), and so on. The robot device may be instructed to acquire images of various parts in the first physical space in advance, for example, the robot device may open a refrigerator (or cabinet, drawer), and acquire images related to various objects in the refrigerator, so as to determine content of the knowledge base.

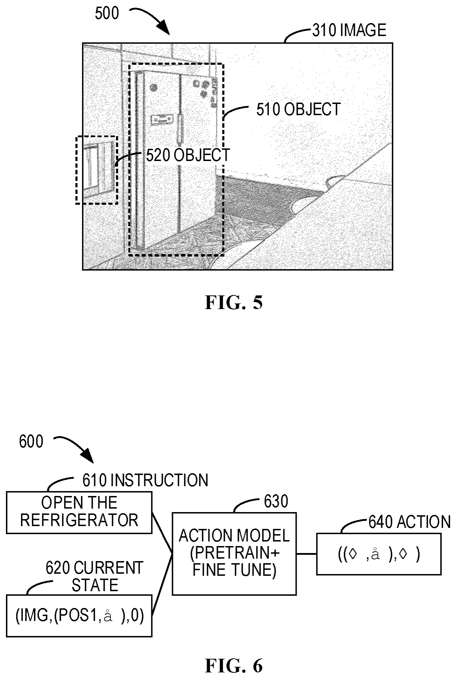

Further details are described with reference to Fig. 5, which illustrates a block diagram 500 of a process for identifying an object from an image in accordance with some implementations of the present disclosure. As shown in Fig. 5, an object 510 (refrigerator) and an object 520 (water dispenser) are identified from the image 310. Assuming that the knowledge base includes "(bottled water, refrigerator)", a physical space where the object 510 is located may be used as the second physical space. With some implementations of the present disclosure, various objects in a physical space may be determined using image recognition techniques, thereby a potential physical space that may include a first object is determined. In this manner, the efficiency and accuracy of positioning the first object may be improved, thereby improving the overall efficiency of performing the user task.

According to some implementations of the present disclosure, after determining the second physical space, a second image of the second physical space may be obtained. During operation of the robot device 110, the second images may be obtained continuously from a plurality of devices. For example, the second images may be obtained from at least any one of the acquisition devices 114, 130, and 132. In response to determining that the second image indicates presence of the first object in the second physical space, the robot device may be instructed to obtain the first object; and the robot device may be instructed to move the first object to the position of the user. The robot device may be instructed to move to the second physical space to obtain the first object. Specifically, the robot device may determine, according to the map obtained in advance, how to move from the current position to the second physical space. For example, it is possible to constantly obtain images of surrounding environment, and a path for moving to the second physical space is determined while ensuring obstacle avoidance.

In some cases, the robot device may directly enter the second physical space and obtain the first object. Assuming the second physical space is "kitchen", the robot device can enter directly into the kitchen and take the bottled water away from the table of the kitchen. In some cases, the robot device cannot directly enter the second physical space. Assuming that the second physical space is a 'refrigerator', the robot device needs to determine a specific manner of opening the refrigerator and accessing an inner space of the refrigerator. According to some implementations of the present disclosure, a robot device may determine an access mode for accessing the second physical space from a second image. The robot device may then be instructed to access the second physical space in the access mode.

Specifically, a handle of the refrigerator may be identified from the second image. In this case, it may be determined that the handle needs to be pulled to open the refrigerator. Alternatively, and/or additionally, a corresponding prompt can be constructed and the model is asked how to open the refrigerator. The prompt may be expressed as, for example, "Determine a manner of opening the refrigerator from the following image". The prompt and the corresponding image may be sent to the model. At this point, the model may return: pull the handle. Then, the robot device may be instructed to pull the handle to open the refrigerator and look for bottled water. By means of some implementations of the present disclosure, a powerful processing capability of a model can be called to solve an unknown problem in a complex environment, thereby determining an action required to be performed by the robot device. In this manner, the ability of the robot device to process complex tasks can be increased to perform user tasks in a more accurate manner.

According to some implementations of the present disclosure, an action model may be utilized to determine specific actions performed by a robot device. More details are described with reference to Fig. 6, which illustrates a block diagram 600 of a process of calling an action model, in accordance with some implementations of the present disclosure. As shown in Fig. 6, an action model 630 may be provided, and the action model may determine a specific action to be performed by the robot device based on a current state of the robot device and instructions, and the action model may be a pre-trained and fine-tuned model.

**It** should be understood that the current state herein may include data in a plurality of aspects, such as an image of the robot device, an environment image of the robot device, posture data of the robotic arm (e. g., positions of various joints of the robotic arm (POSS, ..)), and the state of the tool (e. g., clamps, knives, etc. ) fixed to the end of the robotic arm. For example, 0 may be used to represent the closed state of the clamp, and 1 may be used to represent the open state of the clamp. Instructions and current state can be input to the action model 630, and then the action model can be utilized to determine the action to be performed by the robot device based on the instructions and current state. Here, the action can represent a difference between the current posture and the next posture of the robot device, and a difference between the current state and the next state of the tool, and so on.

An instruction 610 (e. g., "Open the refrigerator") may be input to the action model 630, where the instruction 610 may be represented in a natural language, and the instruction 610 may be determined from the response from the language model. Further, the current state of the robot device may be obtained, and the action model 630 may determine a corresponding action 640 based on the input data. For example, an orientation, position, velocity, acceleration, etc. of various joints in the arm, and/or wheels and/or other movable devices of the robot device, at a next time point can be determined. Further, the determined action 640 can be utilized to control the state of the robot device at the next time point.

With some implementations of the present disclosure, an association relationship can be established between the language model and the action model, and the user task initially input by the user and expressed in natural language is converted into a specific action that can be performed by the robot device. In this manner, the action of the robot device can be precisely controlled, thereby a user task can be performed with higher efficiency.

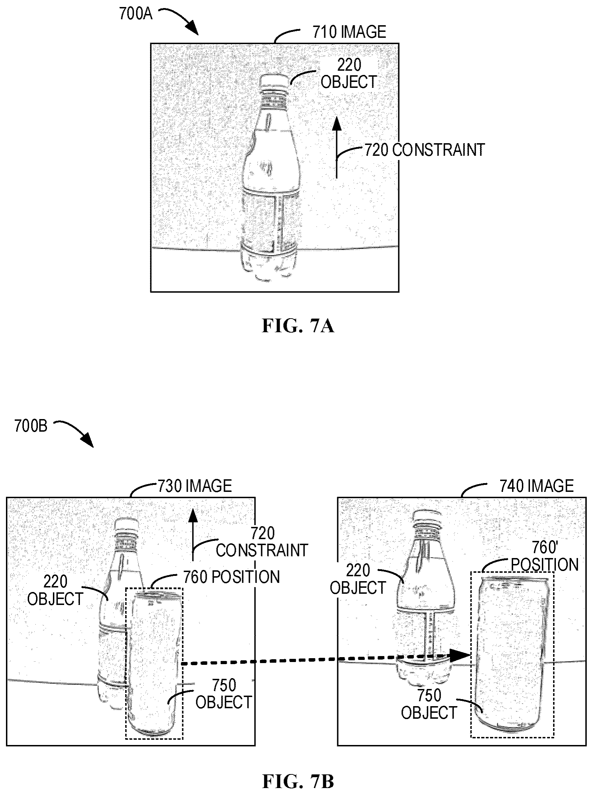

According to some implementations of the present disclosure, after entering the second physical space, an image of the second physical space may be obtained. If it is determined from the image that the bottled water is included in the refrigerator, and the bottled water is not occluded by other objects, the robot device may be directly instructed to retrieve the bottled water. More details are described with reference to Figs. 7A and 7B. Fig. 7A illustrates a block diagram 700A of a process of moving an object according to some implementations of the present disclosure. As shown in Fig. 7, in the image 710, the object 220 is not occluded by other objects, and the object 220 may be taken out directly.

A new instruction and a current state may be input to the action model 630. In this case, the instruction may include "Take out the bottled water", and the current state may represent a state of the robot device acquired after the refrigerator has been opened. Further, the action model 630 may generate a new action to control the robot device to take the bottled water out of the refrigerator. With some implementations of the present disclosure, new instructions and states can be continuously input into the action model to determine subsequent actions.

According to some implementations of the present disclosure, a constraint 720 may be determined, i. e., a constraint that should be followed during performance of the action. For example, it may be determined that the original posture of the bottled water should be maintained during the movement of the bottled water (e. g., the vertical direction is maintained without being tilted). The constraint 720 may be determined using a language model. For example, a prompt may be generated: "Please determine a constraint that should be followed during the movement of the bottled water based on the following image", or "please determine cautions during the movement of the bottled water", etc. In this case, the language model may generate a corresponding constraint. The constraint may be input to the action model 630. In this case, through a series of actions output by the action model 630, the bottled water may be taken out of the refrigerator while ensuring the constraint. With some implementations of the present disclosure, security may be ensured during operation of the robot device, thereby avoiding accidental damage to an object, and so on.

According to some implementations of the present disclosure, if the bottled water is occluded by other items, the items may be removed first, followed by taking the bottled water out. In particular, in response to determining that the second image indicates the first object being occluded by a third object in the second physical space, the third object may be moved in order to obtain the second object. More details are described with reference to Fig. 7B, which illustrates a block diagram 700B of a process for moving an object in accordance with some implementations of the present disclosure. As shown in Fig. 7B, the object 220 is the bottled water in the image 730to be taken out, and the object 750 is located on the front side of the object 220 and the object 750 is occluded blocks. At this point, the robot device may be instructed to move the object 750 from the position 760 to a position that does not prevent taken out of the object 220 (e.g., position 760' in image 740).

According to some implementations of the present disclosure, a target position may be determined and a robot device is instructed to move the object 750 to the target position. At this point, the action model will generate an action to control the robot device to move the object 750 from position 760 to position 760'. In this manner, the robot device may be supported to handle complex problems in complex environments to perform user tasks in a more accurate manner.

According to some implementations of the present disclosure, during movement of the third object, a constraint during the moving of the third object may be determined based on a posture of the third object, and the robot device is instructed to move the third object under the constraint. Similar to the process described above, the object 750 can be moved in compliance with the constraints 720. In this manner, it can be assured that the various actions of the robot device in a complex environment are in compliance with the security specifications.

According to some implementations of the present disclosure, an exit mode for exiting the second physical space may be determined, and the robot device may be instructed to exit the second physical space in the exit mode. In particular, after the robot device has taken the object 220 out, a new image may be acquired and a new prompt is constructed so as to query the language model for the next instruction. The prompt may be expressed as, for example, "Please determine the next instruction based on the following image", "what to do next', etc. The language model may return "Close the refrigerator", and in this case, based on the instruction "Close the refrigerator" and the current state of the robot device, a corresponding action may be generated to instruct the robot device to close the refrigerator.

According to some implementations of the present disclosure, after a robot device close a refrigerator, the robot device may be instructed to obtain a first object and go to a position where a user is located. In particular, an image can be acquired in real time and a user's position can be positioned in the image. Further, corresponding instructions can be determined based on a current position of the robot device (e. g., position A) and a user's position (e. g., position B), and thus the corresponding instructions are determined. In this case, the instruction can be expressed as moving from the position A to the position B. In this case, the action model 630 will generate a corresponding action that can control the robot device 110 to move from the position A to the position B according to the determined trajectory. In this manner, the robot device 110 completes the task of "Give me a bottle of water".

According to some implementations of the present disclosure, in response to determining that the first image indicates presence of the first object in the first physical space, the robot device 110 may be instructed to obtain the first object, and the robot device may be instructed to move the first object to a position of the user. Specifically, if it is initially found from the first image that the first object is included in the first physical environment 160, the robot device 110 can be instructed directly to go to the position of the first object and take the first object back.

It should be appreciated that although one example implementation according to the present disclosure is described above using a Chinese language environment as an example. Alternatively, and/or additionally, the technical solution according to one example implementation of the present disclosure may be performed in various language environments. For example, robots can be controlled in a Chinese environment, English environment, Japanese environment, French environment, etc. In particular, robots can be controlled in different language application environments based on multi-lingual capabilities provided by machine learning techniques. Further, although the process of performing user tasks using a robot device was described above by taking the bottled water as an example, alternatively and/or additionally, the robot device may be controlled to perform other user tasks, e. g., finding other items in a room, placing a certain item at a designated position, etc.

According to some implementations of the present disclosure, a user can interact with a robot device via a language, action, gesture, etc. For example, a user may speak out a user task desired to be performed, a certain action is predefined to specify a user task, etc. Specifically, the user may specify that an action of holding a bottle and drinking water is to be performed, and this action may be used as a user task of triggering the robot device to take bottled water back. When the action is recognized from the acquired image sequence, the robot device can automatically ask the user whether bottled water is needed, and in an event of an affirmative response, the robot device can take back the bottled water.

Alternatively, and/or additionally, the user can interact with the robot device via the interaction unit 112, e. g., the user inputs a task represented in text and/or images, and controls the robot device to perform the task. Alternatively, and/or additionally, the user may specify a performance condition for the task, e. g., perform the task immediately, perform the task after a predetermined time, perform the task when it is determined that a predetermined condition is satisfied (e. g., after the user gets up), etc.

According to some implementations of the present disclosure, the robot device can provide a variety of messages to the user, for example, assuming that the robot device finds a plurality of brands of bottled water, the user can be asked which brand the user needs. For another example, assuming that the robot device does not find bottled water and only finds bottled coffee, the robot device may ask the user whether coffee is needed, etc. Alternatively, and/or additionally, the robot device can ask the user where the desired object can be found, and go to the user-specified position to find the desired object. Alternatively, and/or additionally, if the desired object cannot be found, the robot device can ask the user if a purchase is needed, etc.

According to some implementations of the present disclosure, a variety of positioning algorithms may be utilized to determine positions of the robot device and various objects in the physical environment. For example, a global positioning system (GPS) may be deployed at the robot device, and a precise position of the robot device is determined using satellite signals. Alternatively, and/or additionally, a communication unit may be deployed at the robot device, the position of the robot device being determined by means of a signal between the communication unit and the base station and using a communication network. Alternatively, and/or additionally, a Wi-Fi access point may be deployed in the physical space, and the communication unit at the robot device may interact with the Wi-Fi hotspot to determine the position via Wi-Fi signal strength and a known position of the Wi-Fi access point. Alternatively, and/or additionally, the communication unit at the robot device can support Bluetooth functionality, at which point the position of nearby devices can be determined using Bluetooth signals and known Bluetooth device positions. An inertial navigation system may be deployed at the robot device and an accelerometer and gyroscope is used to measure and calculate the movement and orientation of the computing device in space, thereby determining the position of the robot device.

Alternatively, and/or additionally, a visual positioning system may be used to determine the position of the robot device and/or various objects. A map of the physical space can be obtained in advance, and positions of various objects are marked in the map. The robot device can detect a distance from a surrounding object by using an echo detection unit, and determine specific positions of various objects by combining the acquired image and the map of the physical space. In particular, with computer-aided design (CAD) and geographical information system (GIS), and the position is determined using positioning algorithms. Alternatively, and/or additionally, a tracking unit may be deployed at an important object in a physical space, for example, a tracking unit may be added at a remote controller (for example, a TV remote controller or an air conditioner remote controller) of a household appliance, so that a robot device can obtain an accurate position of the important object in time, and the like.

According to some implementations of the present disclosure, an original position of the robot device itself and a destination position to which it is desired to go may be determined based on the method described above. The robot device can determine a path from an original position to a destination position. For example, surroundings images can be constantly obtained, and in a case where it is ensured that an obstacle is avoided, the path is constantly updated, and the robot device is caused to move to the destination position along the path.

According to some implementations of the present disclosure, after reaching the destination position, the robot device can perform a specified task. For example, a specified object may be obtained and moved to a corresponding position. A language model and/or a knowledge base can be utilized to determine a constraint, i.e., a constraint that should be followed during performance of a task. For example, an image and a corresponding prompt may be obtained, the image and the prompt are input into a language model, and then a constraint is received from the language model. For example, the prompt may be determined as "please determine a constraint that should be followed during movement of the XXX object based on the following image", or "Please determine precautions to be taken during movement of the XXX object", etc.

At this point, it may be determined that during movement of the object (e. g., bottled water, a dish, a bowl, etc.), the original posture of the object should be maintained (e. g., the vertical direction is maintained without being tilted). Further, a constraint may be input into the action model, and in this case, a corresponding task will be performed according to a series of actions output by the action model while ensuring the constraint. With some implementations of the present disclosure, security may be ensured during operation of the robot device, thereby avoiding accidental damage to an object, and so on.

With exemplary implementations of the present disclosure, the robot device may perform a user task in a complex physical space. In this way, even if the desired object cannot be found directly in the physical space, the robot device may find in the physical space a potential physical space that may include the object, thereby finding out the desired object. In this way, the flexibility and accuracy of performing a task in a complex environment by the robot device can be improved, thereby completing a desired user task.

### Example Process

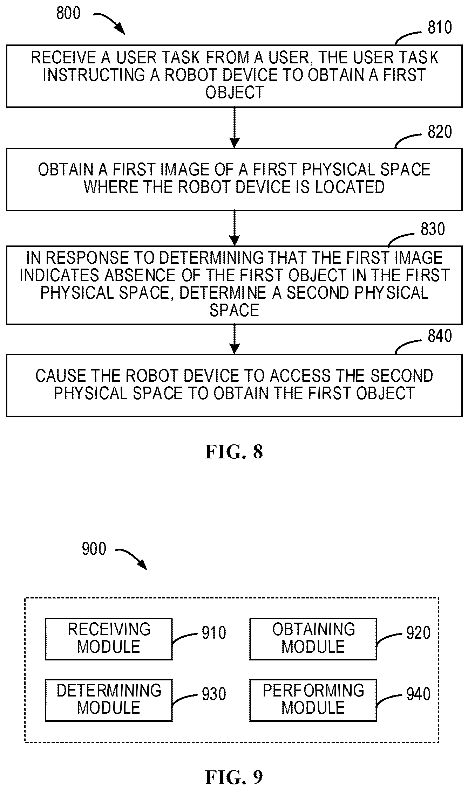

Fig. 8 illustrates a flowchart of a method 800 for performing a user task according to some implementations of the present disclosure. At block 810, a user task is received from a user, the user task instructing a robot device to obtain a first object. At block 820, a first image of a first physical space where the robot device is located is obtained. At block 830, in response to determining that the first image indicates absence of the first object in the first physical space, a second physical space is determined. At block 840, the robot device accesses a second physical space to obtain the first object.

According to some implementations of the present disclosure, the robot device accessing the second physical space includes at least any one of: in response to determining that the robot device is capable of entering the second physical space, causing the robot device to enter the second physical space, or in response to determining that the robot device is not capable of entering the second physical space, moving the robot device to a predetermined range around the second physical space.

According to some implementations of the present disclosure, determining a second physical space includes: obtaining a prompt for positioning the first object based on the first image and the first object; and receiving a response from a machine learning model to the prompt to determine the second physical space.

According to some implementations of the present disclosure, determining the second physical space includes: recognizing a plurality of second objects from the first image; selecting a second object from the plurality of second objects based on a knowledge base; and determining a space associated with the second object as the second physical space.

According to some implementations of the present disclosure, the method 800 further includes: obtaining a second image of the second physical space; in response to determining that the second image indicates presence of the first object in the second physical space, causing the robot device to obtain the first object; and causing the robot device to move the first object to a position of the user.

According to some implementations of the present disclosure, the method 800 further includes: obtaining a second image of the second physical space; and in response to determining that the second image indicates the first object being occluded by a third object in the second physical space, causing the robot device to move the third object so as to obtain the second object.

According to some implementations of the present disclosure, moving the third object includes: determining a constraint during movement of the third object based on a posture of the third object; and causing the robot device to move the third object under the constraint.

According to some implementations of the present disclosure, the method 800 further includes: determining an access mode for accessing the second physical space; and causing the robot device to access the second physical space according to the access mode.

According to some implementations of the present disclosure, the method 800 further includes: determining an exit mode for exiting the second physical space; and causing the robot device to exit the second physical space according to the exit mode.

According to some implementations of the present disclosure, the method 800 further includes: in response to determining that the first image indicates presence of the first object in the first physical space, causing the robot device to obtain the first object; and causing the robot device to move the first object to a position of the user.

According to some implementations of the present disclosure, the first image is from at least one of an acquisition device at the robot device, an acquisition device in a first physical space, an acquisition device in a second physical space.

### Example Apparatus and Device

Fig. 9 illustrates a block diagram of an apparatus 900 for performing a user task in accordance with some implementations of the present disclosure. The apparatus 900 includes: a receiving module 910 configured to receive a user task from a user, the user task robot device obtaining a first object; an obtaining module 920 configured to obtain a first image of a first physical space where the robot device is located; a determining module 930 configured to determine, in response to determining that the first image indicates absence of the first object in the first physical space, a second physical space; and a performing module 940 configured to cause the robot device to access the second physical space to obtain the first object.

According to some implementations of the present disclosure, the performing module 940 is further configured to: in response to determining that the robot device is capable of entering the second physical space, cause the robot device to enter the second physical space; or in response to determining that the robot device is not capable of entering the second physical space, move the robot device to a predetermined range around the second physical space.

According to some implementations of the present disclosure, the determining module 930 is further configured to: obtain a prompt for positioning the first object based on the first image and the first object; and receive a response from a machine learning model to the prompt to determine the second physical space.

According to some implementations of the present disclosure, the determining module 930 is further configured to: recognize a plurality of second objects from the first image; select a second object from the plurality of second objects based on a knowledge base; and determine a space associated with the second object as the second physical space.

According to some implementations of the present disclosure, the obtaining module 920 is further configured to: obtain a second image of the second physical space. The performing module 940 is further configured to: in response to determining that the second image indicates presence of the first object in the second physical space, cause the robot device to obtain the first object; and cause the robot device to move the first object to a position of the user.

According to some implementations of the present disclosure, the obtaining module 920 is further configured to obtain a second image of the second physical space. The performing module 940 is further configured to cause, in response to determining that the second image indicates the first object being occluded by a third object in the second physical space, the robot device to move the third object so as to obtain the second object.

According to some implementations of the present disclosure, the performing module 940 is further configured to: determine a constraint during movement of the third object based on a posture of the third object; and cause the robot device to move the third object under the constraint.

According to some implementations of the present disclosure, the performing module 940 is further configured to: determine an access mode for accessing a second physical space; and cause the robot device to access the second physical space according to the access mode.

According to some implementations of the present disclosure, the performing module 940 is further configured to: determine an exit mode for exiting the second physical space; and cause the robot device to exit the second physical space according to an exit mode.

According to some implementations of the present disclosure, the performing module 940 is further configured to: in response to determining that the first image indicates presence of the first object in the first physical space, cause the robot device to obtain the first object; and cause the robot device to move the first object to a position of the user.

According to some implementations of the present disclosure, the first image is from at least one of an acquisition device at the robot device, an acquisition device in a first physical space, an acquisition device in a second physical space.

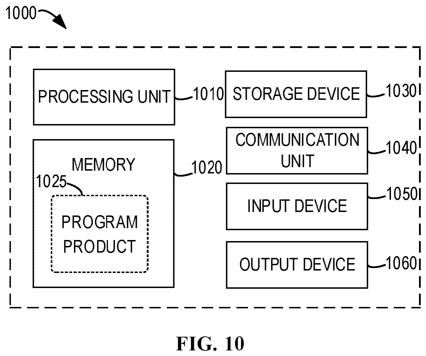

Fig. 10 illustrates a block diagram of a device 1000 in which one or more implementations of the present disclosure may be implemented. It should be understood that the computing device 1000 shown in Fig. 10 is merely exemplary and should not constitute any limitation on the functionality and scope of the implementations described herein. The computing device 1000 shown in Fig. 10 may be used to implement the above-described method.

As shown in Fig. 10, the computing device 1000 is in the form of a general-purpose computing device. Components of the computing device 1000 may include, but are not limited to, one or more processors or processing units 1010, a memory 1020, a storage device 1030, one or more communications units 1040, one or more input devices 1050, and one or more output devices 1060. The processing unit 1010 may be an actual or virtual processor and can perform various processes according to programs stored in the memory 1020. In a multiprocessor system, a plurality of processing units execute computer executable instructions in parallel, so as to improve the parallel processing capability of the computing device 1000.

The computing device 1000 typically includes a number of computer storage media. Such media may be any available media that are accessible by the computing device 1000, including, but not limited to, volatile and non-volatile media, removable and non-removable media. The memory 1020 may be a volatile memory (e. g., a register, cache, random access memory (RAM)), non-volatile memory (e.g., read-only memory (ROM), electrically erasable programmable read-only memory (EEPROM), flash memory), or some combination thereof. The storage device 1030 may be a removable or non-removable medium and may include a machine-readable medium such as a flash drive, a magnetic disk, or any other medium that can be used to store information and/or data (e. g., training data for training) and that can be accessed within the computing device 1000.

The computing device 1000 may further include additional removable/non-removable, volatile/nonvolatile storage media. Although not shown in Fig. 10, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 1020 may include a computer program product 1025 having one or more program modules configured to perform various methods or actions of various implementations of the present disclosure.

The communication unit 1040 implements communication with other computing devices through a communication medium. In addition, functions of components of the computing device 1000 may be implemented by a single computing cluster or a plurality of computing machines, and these computing machines can communicate through a communication connection. Thus, the computing device 1000 may operate in a networked environment using logical connections to one or more other servers, network personal computers (PCs), or another network node.

The input device 1050 may be one or more input devices such as a mouse, keyboard, trackball, etc. The output device 1060 may be one or more output devices such as a display, speaker, printer, etc. The computing device 1000 may also communicate with one or more external devices (not shown) such as a storage device, a display device, or the like through the communication unit 1040 as required, and communicate with one or more devices that enable a user to interact with the computing device 1000, or communicate with any device (e. g., a network card, a modem, or the like) that enables the computing device 1000 to communicate with one or more other computing devices. Such communication may be performed via an input/output (I/O) interface (not shown).

According to an exemplary implementation of the present disclosure, a computer readable storage medium is provided, on which a computer-executable instruction is stored, where the computer executable instruction is executed by a processor to implement the above-described method. According to an exemplary implementation of the present disclosure, there is also provided a computer program product, which is tangibly stored on a non-transitory computer readable medium and includes computer-executable instructions that are executed by a processor to implement the method described above. According to an exemplary implementation of the present disclosure, there is provided a computer program product, having a computer program stored thereon, the program, when being executed by a processor, implements the above-described method.

Aspects of the present disclosure are described herein with reference to flowchart and/or block diagrams of methods, apparatus, devices and computer program products implemented in accordance with the present disclosure. It will be understood that each block of the flowcharts and/or block diagrams and combinations of blocks in the flowchart and/or block diagrams can be implemented by computer readable program instructions.

These computer readable program instructions may be provided to a processing unit of a general-purpose computer, special purpose computer, or other programmable data processing apparatus to produce a machine, such that the instructions, which execute via the processing unit of the computer or other programmable data processing apparatus, create means for implementing the functions/actions specified in one or more blocks of the flowchart and/or block diagrams. These computer readable program instructions may also be stored in a computer readable storage medium that can direct a computer, a programmable data processing apparatus, and/or other devices to function in a particular manner, such that the computer readable medium storing the instructions includes an article of manufacture including instructions which implement various aspects of the functions/actions specified in one or more blocks of the flowchart and/or block diagrams.

The computer readable program instructions may be loaded onto a computer, other programmable data processing apparatus, or other devices, causing a series of operational steps to be performed on a computer, other programmable data processing apparatus, or other devices, to produce a computer implemented process such that the instructions, when being executed on the computer, other programmable data processing apparatus, or other devices, implement the functions/actions specified in one or more blocks of the flowchart and/or block diagrams.

The flowcharts and block diagrams in the drawings illustrate the architecture, functionality, and operations of possible implementations of the systems, methods and computer program products according to various implementations of the present disclosure. In this regard, each block in the flowchart or block diagram may represent a module, segment, or portion of instructions which includes one or more executable instructions for implementing the specified logical function(s). In some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

Various implementations of the disclosure have been described as above, the foregoing description is exemplary, not exhaustive, and the present application is not limited to the implementations as disclosed. Many modifications and variations will be apparent to those of ordinary skill in the art without departing from the scope and spirit of the implementations as described. The selection of terms used herein is intended to best explain the principles of the implementations, the practical application, or improvements to technologies in the marketplace, or to enable those skilled in the art to understand the implementations disclosed herein.

## Claims

1. A method for performing a user task, comprising:
receiving a user task from a user, the user task instructing a robot device to obtain a first object;
obtaining a first image of a first physical space where the robot device is located;
in response to determining that the first image indicates absence of the first object in the first physical space, determining a second physical space; and
causing the robot device to access the second physical space to obtain the first object.

2. The method of claim 1, wherein causing the robot device to access the second physical space comprises at least one of:
in response to determining that the robot device is capable of entering the second physical space, causing the robot device to enter the second physical space, or
in response to determining that the robot device is not capable of entering the second physical space, moving the robot device to a predetermined range around the second physical space.

3. The method of claim 1, wherein determining the second physical space comprises:
obtaining a prompt for positioning the first object based on the first image and the first object; and
receiving a response from a machine learning model to the prompt to determine the second physical space.

4. The method of claim 1, wherein determining the second physical space comprises:
recognizing a plurality of second objects from the first image;
selecting a second object from the plurality of second objects based on a knowledge base; and
determining a space associated with the second object as the second physical space.

5. The method of claim 1, further comprising:
obtaining a second image of the second physical space;
in response to determining that the second image indicates presence of the first object in the second physical space, causing the robot device to obtain the first object; and
causing the robot device to move the first object to a position of the user.

6. The method of claim 1, further comprising:
obtaining a second image of the second physical space; and
in response to determining that the second image indicates the first object being occluded by a third object in the second physical space, causing the robot device to move the third object so as to obtain the second object.

7. The method of claim 6, wherein moving the third object comprises:
determining a constraint during movement of the third object based on a posture of the third object; and
causing the robot device to move the third object under the constraint.

8. The method of claim 3, further comprising:
determining an access mode for accessing the second physical space; and
causing the robot device to access the second physical space according to the access mode.

9. The method of claim 8, further comprising:
determining an exit mode for exiting the second physical space; and
causing the robot device to exit the second physical space according to the exit mode.

10. The method of claim 1, further comprising:
in response to determining that the first image indicates presence of the first object in the first physical space, causing the robot device to obtain the first object; and
causing the robot device to move the first object to a position of the user.

11. The method of claim 1, wherein the first image is from at least one of an acquisition device at the robot device, an acquisition device in a first physical space, an acquisition device in a second physical space.

12. An apparatus for performing a user task, comprising:
a receiving module configured to receive a user task from a user, the user task instructing a robot device to obtain a first object;
an obtaining module configured to obtain a first image of a first physical space where the robot device is located;
a determining module configured to in response to determining that the first image indicates absence of the first object in the first physical space, determine a second physical space; and
a performing module configured to cause the robot device to access the second physical space to obtain the first object.

13. An electronic device, comprising:
at least one processing unit;
at least one memory coupled to the at least one processing unit and storing instructions for execution by the at least one processing unit that, when executed by the at least one processing unit, cause the electronic device to perform a method according to any of claims 1 to 11.

14. A computer readable storage medium having stored thereon a computer program which, when executed by a processor, causes the processor to carry out a method according to any one of claims 1 to 11.

15. A computer program product comprising a computer program, wherein the computer program, when executed by a processor, implements the method according to any of claims 1 to 11.
